Europäisches Patentamt

European Patent Office

Office européen des brevets

(11) Veröffentlichungsnummer: **0 149 052**
**A1**

## (12) EUROPÄISCHE PATENTANMELDUNG

(21) Anmeldenummer: **84113816.7**

(22) Anmeldetag: **15.11.84**

(51) Int. Cl.⁴: **F 16 B 15/04**

(30) Priorität: **13.01.84 DE 3401032**

(43) Veröffentlichungstag der Anmeldung:
**24.07.85 Patentblatt 85/30**

(84) Benannte Vertragsstaaten:
**AT BE CH FR GB IT LI NL SE**

(71) Anmelder: **artur fischer forschung**
**Weinhalde 14 - 18**
**D-7244 Waldachtal 3 (Tumlingen)(DE)**

(72) Erfinder: **Fischer, Artur, Dr. h. c.**
**Weinhalde 34**
**D-7244 Waldachtal 3/Tumlingen(DE)**

(54) **Spreiznagel.**

(57) Die Erfindung betrifft einen Spreiznagel (1) bestehend aus einem an einem Ende mit Mitteln (2) zum Befestigen von Gegenständen (11) und am anderen Ende mit einer Spitze (5) versehenen Schaft, der über eine Teil seiner Länge mit einer einen ellipsenförmigen Querschnitt bildenden Verdickung (21) und einer plastisch und oder elastisch verformbare Elemente (20) aufweisenden Aufspaltung (3) versehen ist. Zur Herstellung des Spreiznagels (1) im Spritzgußverfahren und in einem Arbeitsgang sind die verformbaren Elemente (20) quer zur Längsrichtung der Aufspaltung (3) verlaufende und zumindest mit einer Begrenzungsfläche der Aufspaltung (3) einstükkig verbundene Stege.

Fig.3

EP 0 149 052 A1

EP 1482

0149052

## Spreiznagel

Die Erfindung betrifft einen Spreiznagel bestehend aus einem an einem Ende mit Mitteln zum Befestigen von Gegenständen und am anderen Ende mit einer Spitze versehenen Schaft.

In der europäischen Anmeldung 84112533.9 ist ein Spreiznagel vorgeschlagen, der durch plastisch und/oder elastisch verformbare Einlagen ein Spreizvermögen aufweist, das bei einfacher Montierbarkeit durch Eintreiben des Spreiznagels in ein Bohrloch zu hohen Haltewerten selbst bei einer nachträglichen Bohrlocherweiterung durch Rißbildung führt.

Der Erfindung liegt die Aufgabe zugrunde, den vorgeschlagenen Spreiznagel derart zu verbessern, daß seine Herstellung in einem Arbeitsgang im Spritzgußverfahren möglich ist.

Erfindungsgemäß wird dies dadurch erreicht, daß der Schaft über einen Teil seiner Länge mit einer einen ellipsenförmigen Querschnitt bildenden Verdickung und einer plastisch und/oder elastisch verformbare Elemente aufweisenden Aufspaltung versehen ist, und daß die verformbaren Elemente quer zur Längsrichtung der Aufspaltung verlaufende und zumindest mit einer Begrenzungsfläche der Aufspaltung einstückig verbundene Stege sind.

Die Stege stützen die Begrenzungsflächen der Aufspaltung des Spreiznagels so ab, daß beim Einschlagen des Spreiznagels in ein Bohrloch der Schaft des Spreiznagels im Bereich der Verdickung derart zusammengepreßt wird, daß eine Verformung der Stege in der Aufspaltung stattfindet. Durch die sich aus der plastischen und/oder elastischen Verformung der Stege ergebende Rückstellkraft werden die Spreizschenkel des Spreiznagels fest gegen die Bohrlochwandung gepreßt und somit die Verankerung erreicht. Der Spreiznagel mit den verformbaren Stegen ist im Spritzgußverfahren in einem Arbeitsgang herstellbar, wobei als Material für den Spreiznagel vorzugsweise Kunststoff in Frage kommt.

. . .

EP 1482

In einer weiteren Ausgestaltung der Erfindung kann die Aufspaltung im Bereich der Spitze geschlossen sein. Durch die Schließung der Aufspaltung wird eine Versteifung des Schaftes erreicht, die das Einschlagen des Spreiznagels begünstigt. Gleichzeitig wird auch vermieden, daß gegebenenfalls im Bohrloch verbleibendes Bohrmehl in die Aufspaltung eindringt.

In einer weiteren Ergänzung der Erfindung können die Stege gegenüber der Längsseite des Schaftes zurückgesetzt sein. Bei sehr engen Bohrlöchern ist eine starke Verformung der Stege erforderlich. Durch das Zurücksetzen der Stege gegenüber der Längsseite des Schaftes ergeben sich zusätzliche Lücken, in die das Material verdrängt werden kann.

In einer weiteren Ausgestaltung der Erfindung können die Stege die beiden Begrenzungsflächen der Aufspaltung miteinander verbinden. Auch durch diese Gestaltung wird eine Versteifung des Schaftes erreicht, ohne daß dadurch die Verformungsmöglichkeit der Stege beeinträchtigt wird. Zusätzlich können diese Stege eine Sollknickstelle aufweisen, die eine erhöhte Elastizität bewirken.

In der Zeichnung sind Ausführungsbeispiele der Erfindung dargestellt. Es zeigen:

Figur 1          den Spreiznagel mit in der Aufspaltungsebene getrennten Stegen

Figur 2          einen Spreiznagel mit die Begrenzungsflächen der Aufspaltung verbindenden Stegen

Figur 3          die Befestigung eines Gegenstandes mit dem Spreiznagel nach Figur 2

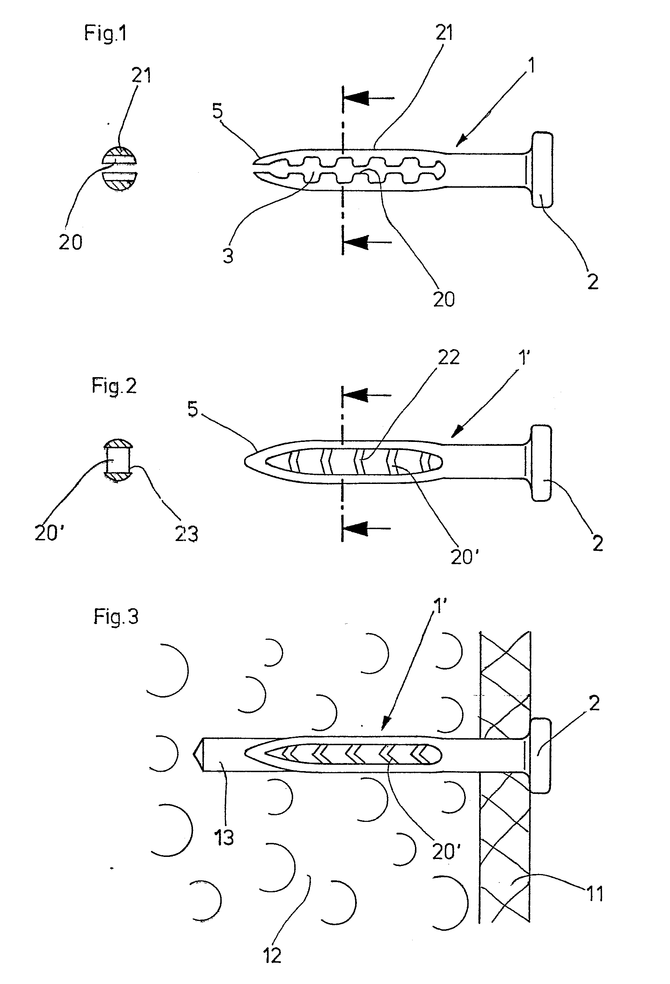

Der Spreiznagel 1 nach Figur 1 ist mit einem Nagelkopf 2 zum Verspannen eines Gegenstandes an einem Mauerwerk versehen. Der Spreizbereich des Spreiznagels 1 wird durch eine Aufspaltung 3 gebildet, in der quer zu

EP 1482

ihrer Längsrichtung und von ihren beiden Begrenzungsflächen ausgehende Stege 20 angeordnet sind. Der Schaft des Spreiznagels ist im Bereich der Aufspaltung 3 mit einer im Querschnitt ellipsenförmigen Verdickung 21 versehen, die entgegengesetzt des Kopfes in eine Spitze 5 ausläuft. Die Außenkontur der Verdickung entspricht annähernd der Form der Aufspaltung 3, sodaß über die gesamte Länge des Spreizbereiches eine annähernd gleichmäßige Dicke der Spreizschenkel entsteht. Die von beiden Begrenzungsflächen der Aufspaltung 3 ausgehenden Stege 20 stehen sich jeweils gegenüber, sodaß beim Eintreiben des Spreiznagels 1 die Stirnseiten der Stege 20 aufeinandertreffen und die Spreizschenkel abstützen. Durch Zusammendrücken der Spreizschenkel und der sich dabei ergebenden Verformung der Stege 20, wird eine die Verankerung des Spreiznagels bewirkende Verkeilung erreicht.

Beim Spreiznagel 1' nach Figur 2 ist die Aufspaltung 3 im Bereich der Spitze 5 geschlossen. Ferner wird über die Stege 20' eine einstückige Verbindung der beiden Begrenzungsflächen der Aufspaltung 3 erreicht. Zur Erhöhung der Elastizität und Verminderung der Eintreibenergie weisen diese Stege 20' eine Sollknickstelle 22 auf. Ferner sind die Stege gegenüber der Längsseite des Schaftes zurückgesetzt, sodaß Lücken 23 entstehen, in die das plastisch verformte Material der Stege 20' zusätzlich verdrängt werden kann.

Zum Befestigen einer Holzlatte 11 an einem Mauerwerk 12 gemäß Figur 3 wird durch die Holzlatte hindurch in das Mauerwerk ein dem nicht verdickten Schaftdurchmesser des Spreiznagels 1' entsprechendes Bohrloch 13 erstellt. Durch Hammerschläge auf den Nagelkopf 2 wird der Spreiznagel 1 soweit in das Bohrloch eingetrieben, bis der Nagelkopf 2 an der Latte 11 zur Anlage kommt. Durch Verformung der Stege 20' und der sich daraus ergebenden Rückstellkraft wird die zur Befestigung der Latte 11 notwendige Verankerung erreicht.

artur fischer forschung

7244 Tumlingen / Waldachtal 3

10. Januar 1984

Ju/TM

- 1 -

EP 1482

PATENTANSPRÜCHE

1. Spreiznagel bestehend aus einem an einem Ende mit Mitteln zum Befestigen von Gegenständen und am anderen Ende mit einer Spitze versehenen Schaft, dadurch gekennzeichnet, daß der Schaft über einen Teil seiner Länge mit einer einen ellipsenförmigen Querschnitt bildenden Verdickung und einer plastisch und/oder elastisch verformbare Elemente aufweisenden Aufspaltung versehen ist, und daß die verformbaren Elemente quer zur Längsrichtung der Aufspaltung verlaufende und zumindest mit einer Begrenzungsfläche der Aufspaltung einstückig verbundene Stege sind.

2. Spreiznagel nach Anspruch 1, dadurch gekennzeichnet, daß die Aufspaltung im Bereich der Spitze geschlossen ist.

3. Spreiznagel nach Anspruch 1, dadurch gekennzeichnet, daß die Stege gegenüber der Längsseite des Schaftes zurückgesetzt sind.

...

4. Spreiznagel nach Anspruch 1, dadurch gekennzeichnet, daß die Stege die beiden Begrenzungsflächen der Aufspaltung miteinander verbinden.

5. Spreiznagel nach Anspruch 4, dadurch gekennzeichnet, daß die Stege eine Sollknickstelle aufweisen.

1/1

0149052

Fig.1

Fig.2

Fig.3

**Europäisches Patentamt**

## EUROPÄISCHER RECHERCHENBERICHT

| EINSCHLÄGIGE DOKUMENTE | | | EP 84113816.7 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) | |
| A | DE - A1 - 2 811 640 (BILLING,LARS) <br> * Patentanspruch 1; Fig. 4 * | 1,2 | F 16 B 15/04 | |
| A | FR - A - 1 195 076 (GABRIEL PITET) <br> * Patentanspruch ; Fig. 1 * | 1 | | |
| A | US - A - 831 303 (JAMES LUTHER SCOTT) <br> * Patentanspruch; Fig. 1 * | 1 | | |
| | | | **RECHERCHIERTE SACHGEBIETE (Int. Cl.4)** | |
| | | | F 16 B | |
| | Der vorliegende Recherchenbericht wurde für alle Patentansprüche erstellt. | | | |
| | Recherchenort | Abschlußdatum der Recherche | | Prüfer |
| | WIEN | 12-03-1985 | | REIF |